# EUROPEAN PATENT APPLICATION

(11) **EP 4 568 316 A1**
(43) Date of publication of application: **11.06.2025**
(21) Application number: 22954028.1
(22) Date of filing: 04.08.2022
(51) Int. Cl.: H04W 16/28, H04W 28/16

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIMODAIRA, Hidekazu, Tokyo 100-6150 (JP); NAGATA, Satoshi, Tokyo 100-6150 (JP)
(74) Representative: Hoffmann Eitle
(86) International application number: PCT/JP2022/029957
(87) International publication number: WO 2024/029039

(57) **Abstract**

A terminal according to one aspect of the present disclosure includes a control section that assumes that a first downlink (DL) signal and a second DL signal of different specific quasi-co-location (QCL) types are scheduled or configured in a same time domain in a frequency range higher than a first frequency range, and a receiving section that receives the first DL signal and the second DL signal in the same time domain, wherein the first DL signal is a first physical downlink control channel (PDCCH), and the second DL signal is a physical downlink shared channel (PDSCH) or a second PDCCH. According to one aspect of the present disclosure, signals/channels can be properly transmitted/received in the same time domain.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTR_AN); Overall description; Stage 2 (Release 8)," April, 2010

### Summary of Invention

### Technical Problem

For future radio communication systems (for example, NR), receiving and transmitting DL/UL signals of different beams at the same time in a specific frequency range (FR) by a terminal (user terminal or user equipment (UE)) is under study.

However, the study on a scheduling restriction of signals for the UE in such a situation is not sufficient in existing specifications. Insufficient study on this issue may result in poor communication quality, lower throughput, etc.

One of the objectives of the present disclosure is therefore to provide a terminal, a radio communication method and a base station that can properly transmit/receive signals/channels in the same time domain.

### Solution to Problem

A terminal according to one aspect of the present disclosure includes a control section that assumes that a first downlink (DL) signal and a second DL signal of different specific quasi-co-location (QCL) types are scheduled or configured in a same time domain in a frequency range higher than a first frequency range, and a receiving section that receives the first DL signal and the second DL signal in the same time domain, wherein the first DL signal is a first physical downlink control channel (PDCCH), and the second DL signal is a physical downlink shared channel (PDSCH) or a second PDCCH.

### Advantageous Effects of Invention

According to one aspect of the present disclosure, signals/channels can be properly transmitted/received in the same time domain.

### Brief Description of Drawings

[FIG. 1] FIG. 1 is a diagram to show an example of a scheduling restriction in existing specifications.
[FIG. 2] FIG. 2A through FIG. 2C are diagrams to show examples of cell coverages for SSBs.
[FIG. 3] FIG. 3 is a diagram to show an example of a combination of beams that can be received by UE at the same time.
[FIG. 4] FIG. 4A and FIG. 4B are diagrams to show examples of reception methods of a PDCCH and a PDSCH according to a fourth embodiment.
[FIG. 5] FIG. 5 is a diagram to show an example of a schematic configuration of a radio communication system according to one embodiment.
[FIG. 6] FIG. 6 is a diagram to show an example of a configuration of a base station according to one embodiment.
[FIG. 7] FIG. 7 is a diagram to show an example of a configuration of a user terminal according to one embodiment.
[FIG. 8] FIG. 8 is a diagram to show an example of a hardware configuration of the base station and the user terminal according to one embodiment.
[FIG. 9] FIG. 9 is a diagram to show an example of a vehicle according to one embodiment.

### Description of Embodiments

### (TCI, Spatial Relation, QCL)

For NR, controlling a reception processing (for example, at least one of reception, de-mapping, demodulation and decoding) for UE of at least one of a signal and a channel (to be expressed as a signal/channel) and a transmission processing (for example, at least one of transmission, mapping, precoding, modulation and coding) based on a transmission configuration indication state (TCI state) is under study.

The TCI state may represent the one that is applied to a downlink signal/channel. The one equivalent to the TCI state that is applied to an uplink signal/channel may be expressed as spatial relation.

The TCI state is information on a quasi-co-location (QCL) of a signal/channel and may be referred to as a spatial reception parameter, spatial relation information, etc. The TCI state may be configured in the UE for each of the channels or for each of the signals.

The QCL is an indicator representing the statistical properties of a signal/channel. For example, when a certain signal/channel is in a QCL relation with another signal/channel, it may mean that at least one of a Doppler shift, a Doppler spread, an average delay, a delay spread and a spatial parameter (for example, the spatial reception parameter (spatial Rx parameter)) can be assumed to be identical (QCL with respect to at least one of them) in these different plurality of signals/channels.

Note that the spatial reception parameter may correspond to a reception beam of the UE (for example, a reception analog beam), and a beam may be specified based on a spatial QCL. The QCL (or at least one element of the QCL) in the present disclosure may be interchangeably read with an sQCL (spatial QCL).

A plurality of types (QCL types) may be specified for the QCL. For example, four QCL types A through D may be provided with different parameters (or parameter sets) that can be assumed to be identical, and the parameters, which may be referred to as QCL parameters, are shown below:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial reception parameter.

The UE's assumption that a certain control resource set (CORESET), channel or reference signal is in a particular QCL (for example, QCL type D) relation with another CORESET, channel or reference signal may be referred to as a QCL assumption.

The UE, based on the TCI state or the QCL assumption of the signal/channel, may determine at least one of a transmission beam (Tx beam) and a reception beam (Rx beam) of the signal/channel.

The TCI state may be, for example, information on the QCL between a target channel (in other words, the reference signal (RS) for the channel) and another signal (for example, another RS). The TCI state may be configured (directed) by higher layer signaling, physical layer signaling or a combination thereof.

The physical layer signaling may be, for example, downlink control information (DCI).

The channel for which the TCI state or the spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS in the QCL relation with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)) and a reference signal for QCL detection (also referred to as a QRS).

The SSB is a signal block that includes at least one of a primary synchronization signal (PSS), a secondary synchronization signal (SSS) and a broadcast channel (Physical Broadcast Channel (PBCH)). The SSB may be referred to as an SS/PBCH block.

The RS of a QCL type X in the TCI state may represent an RS in a QCL type X relation with (a DMRS of) a certain channel/signal and may be referred to as a QCL source of the QCL type X in the TCI state.

For the PDCCH and PDSCH, a QCL type A RS is required to be configured, and a QCL type D RS may be additionally configured. Since it is difficult to estimate the Doppler shift, delay, etc., by receiving one shot of the DMRS, the QCL type A RS is used to improve channel estimation accuracy. The QCL type D RS is used to determine the reception beam when receiving the DMRS.

For example, TRS1-1, 1-2, 1-3 and 1-4 are transmitted, and TRS1-1 is notified as a QCL type C/D RS depending on the TCI state of the PDSCH. The UE can use information obtained from a result of a reception/measurement of past periodic TRS1-1 to receive the DMRS for the PDSCH/estimate the channel by being notified of the TCI state. In this case, the QCL source of the PDSCH is TRS1-1, and a QCL target is the DMRS for the PDSCH.

### (Multi Reception (Rx) Chain)

In Rel-18 NR and later, specifying requirements for beam failure detection (BFD)/candidate beam detection (CBD) for the UE that has a plurality of reception chains (Rx Chains) is under study.

For example, when the UE has a plurality of panels (reception panels), a plurality of downlink (DL)/uplink (UL) signals of different specific QCL types (for example, the QCL type D) are preferably able to be transmitted and received (at the same time) (for a certain component carrier (CC)).

In Rel. 17 and earlier versions, the UE is specified in FR2 as not being able to receive a plurality of DL signals of different QCL type D at the same time.

In Rel. 17 and earlier versions, for example, whether an SSB/CSI-RS and the PDSCH/PDCCH for radio link monitoring, a BF and an L1-RSRP (beam) measurement are configured/scheduled with the same symbol (i.e., whether the UE can receive them at the same time) is specified for each of the applications of the SSB/CSI-RS as a scheduling availability/scheduling restriction.

For example, there is no scheduling restriction by an RLM performed with the same subcarrier interval as the PDSCH/PDCCH in FR1. In other words, when the RLM is performed in FR1 with an RLM reference signal (RLM-RS (for example, the SSB/CSI-RS)) of the same subcarrier as the PDSCH/PDCCH, the UE can receive the RLM-RS and the PDSCH/PDCCH in the same time domain (symbol).

For example, when the RLM is performed in FR1 with a different subcarrier interval from the PDSCH/PDCCH, if the UE supports a capability with respect to simultaneous reception (for example, a capability reported with simultaneousRxDataSSB-DiffNumerology), there is no scheduling restriction.

On the other hand, when the RLM is performed in FR1 with a different subcarrier interval from the PDSCH/PDCCH, if the UE does not support the capability with respect to the simultaneous reception, the UE is not expected/assumed to transmit the PUCCH/PUSCH/SRS or receive the PDCCH/PDSCH/CSI-RS (for tracking/CQI) in the symbol of the RLM-RS (SSB).

For example, when the RLM reference signal (RLM-RS) in FR2 is the CSI-RS of the QCL type D with an active TCI state for the PDCCH/PDSCH (CSI-RS which is type-D QCLed with active TCI state for PDCCH/PDSCH), and the CSI-RS is not the CSI-RS in a CSI-RS resource set in which repetition is configured to be ON, there is no scheduling restriction by the RLM based on the CSI-RS.

On the other hand, otherwise, the UE is not expected/assumed to transmit the PUCCH/PUSCH/SRS or receive the PDCCH/PDSCH/CSI-RS (for tracking/CQI) in the symbol of the RLM-RS.

If simultaneous reception of the DL signals of the different QCL type D is possible in FR2, the maximum throughput of the UE and the efficiency of the use of the resource are expected to be improved.

In Rel. 17 and earlier versions, due to the scheduling restriction described above, in the case of the operation of 64 SSBs (Tracking Reference Signal (TRS)) in FR2, the PDCCH/PDSCH cannot be scheduled with a reception symbol of the SSB/TRS of the different QCL type D from the PDSCH/PDCCH. As a result, the maximum throughput of the UE was limited, and the efficiency of the use of the resource of the UE was also decreased.

In FR1, the PDSCH can be allocated across all symbols if there are no data signals, etc., of other UE. However, due to the scheduling restriction between RSs/channels of the different QCL type D in FR2, the PDSCH is not scheduled with a symbol that corresponds to 63 SSBs except for the SSB of its own UE (i.e., 63 SSBs of the different QCL type D from the SSB of its own UE).

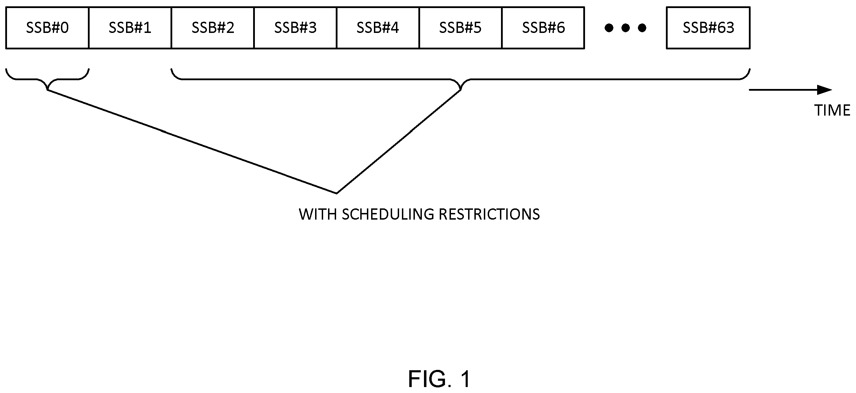

FIG. 1 is a diagram to show an example of the scheduling restriction in existing specifications. In the example shown in FIG. 1, the UE determines SSB #1 as the QCL source of the PDSCH/PDCCH out of 64 SSBs (SSBs #0 through #63). In this case, in FR2, the UE does not assume that the PDSCH/PDCCH is scheduled in the same symbols as SSBs other than SSB #1.

The initial deployment in FR2 is a single transmission/reception point (S-TRP) in Rel. 15. Non-coherent joint transmission (NCJT) that utilizes a multi TRP (M-TRP) is considered to be promising for increasing the rank in FR2.

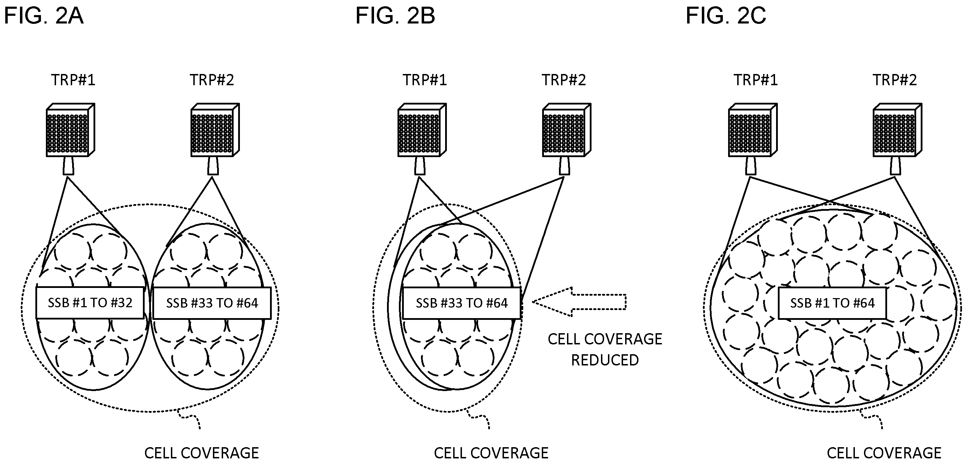

In the Rel-15 S-TRP, one cell area covers 64 SSBs at the maximum (see FIG. 2A). Each of SSB beams does not overlap (spatially/physically) with each other to maximize a cell coverage.

In Rel-16 M-TRP, the SSBs from two (both) TRPs need to cover the same area to make the NCJT possible (see FIG. 2B). However, in this case, the cell coverage decreases compared to the case of Rel. 15 described above (FIG. 2A).

In Rel-17 M-TRP, 64 SSBs of a certain TRP (TRP #1, physical cell ID (PCI) #1) and 64 SSBs of another TRP (TRP #2, PCI #2) can cover the cell coverage (see FIG. 2C). The cell coverage maintains the coverage in Rel. 15 described above. According to an inter-cell of such a Rel-17 M-TRP, this is promising for making the operation of the M-TRP in FR2 possible.

As described above, in Rel. 18 and later versions, simultaneous transmission/reception of signals of the different beams at specific frequencies (for example, FR2) is under study.

However, the study on the scheduling restriction for each channel/signal is not sufficient for the simultaneous transmission/reception of signals of the different beams.

The study on how to determine the combination of beams that the UE can receive at the same time is also insufficient.

Insufficient study on these issues may result in poor communication quality, lower throughput, etc., due to the failure to properly schedule the channels/signals.

Therefore, the inventors of the present invention came up with the idea of a method to solve the problem described above.

The following is a detailed description of embodiments according to the present disclosure with reference to the drawings. The radio communication method according to each of the embodiments may be applied alone or in combination.

In the present disclosure, "A/B" and "at least one of A and B" may be interchangeably read with each other. In the present disclosure, "A/B/C" may also mean "at least one of A, B and C."

In the present disclosure, notification, activate, deactivate, direct (or indicate), select, configure, update, determine, etc., may be interchangeably read with each other. In the present disclosure, support, control, can control, operate, can operate, etc., may be interchangeably read with each other.

In the present disclosure, radio resource control (RRC), RRC parameter, RRC message, higher layer parameter, field, information element (IE), configuration, etc., may be interchangeably read with each other. In the present disclosure, medium access control control element (MAC Control Element (CE)), update command, activation/deactivation command, etc., may be interchangeably read with each other.

In the present disclosure, the higher layer signaling may be, for example, any of a radio resource control (RRC) signaling, a medium access control (MAC) signaling, broadcast information or a combination thereof.

In the present disclosure, the MAC signaling may use, for example, the MAC control element (MAC CE), an MAC protocol data unit (PDU), etc. The broadcast information may be, for example, a master information block (MIB), a system information block (SIB), a minimum system information (Remaining Minimum System Information (RMSI)), other system information (OSI), etc.

In the present disclosure, a physical layer signaling may be, for example, the downlink control information (DCI), uplink control information (UCI), etc.

In the present disclosure, index, identifier (ID), indicator, resource ID, etc., may be interchangeably read with each other. In the present disclosure, sequence, list, set, group, family, cluster, subset, etc., may be interchangeably read with each other.

In the present disclosure, reception (Rx) chain, receiver, receiving section, panel, UE panel, UE capability value set, panel group, beam, analog beam, beam group, precoder, uplink (UL) transmission entity, transmission/reception point (TRP), base station, spatial relation information (SRI), spatial relation, SRS resource indicator (SRI), control resource set (COntrol REsource SET (CORESET)), physical downlink shared channel (PDSCH), codeword (CW), transport block (TB), reference signal (RS), antenna port (for example, reference signal for demodulation (DeModulation Reference Signal (DMRS)) port), antenna port group (for example, DMRS port group), group (for example, spatial relation group, Code Division Multiplexing (DCM) group, reference signal group, CORESET group, Physical Uplink Control Channel (PUCCH) group, PUCCH resource group), resource (for example, reference signal resource, SRS resource), resource set (for example, reference signal resource set), CORESET pool, downlink transmission configuration indication state (TCI state) (DL TCI state), uplink TCI state (UL TCI state), unified TCI state, common TCI state, quasi co-location (QCL), QCL assumption, etc., may be interchangeably read with each other.

A spatial relation information identifier (ID) (TCI state ID) and the spatial relation information (TCI state) may be interchangeably read with each other. "Spatial relation information" may be interchangeably read with "a set of spatial relation information," "one or more spatial relation information," etc. The TCI state and the TCI may be interchangeably read with each other.

In the present disclosure, repetition, repeated transmission, and repeated reception may be interchangeably read with each other.

In the present disclosure, channel, signal and channel/signal may be interchangeably read with each other. In the present disclosure, DL channel, DL signal, DL signal/channel, transmission/reception of DL signal/channel, DL reception and DL transmission may be interchangeably read with each other. In the present disclosure, UL channel, UL signal, UL signal/channel, transmission/reception of UL signal/channel, UL reception and UL transmission may be interchangeably read with each other.

### (Radio Communication Method)

At least one of the embodiments in the present disclosure may be applied in a specific frequency range.

The specific frequency range may be, for example, a frequency range that is higher (greater) than a first frequency range (for example, frequency range 1 (FR1)) (for example, FR2/FR2-1/FR2-2/FR3/FR4/FR5). The specific frequency may be, for example, a frequency range in which the center frequency is higher than a specific value (for example, 24250 MHz).

At least one of the embodiments of the present disclosure may be applied to the reception/transmission of the DL/UL signal of a specific QCL type.

The specific QCL type may be, for example, the QCL type D. Note that the QCL type D is merely an example of a name, and a different name may be used. In other words, although in each of the following embodiments of the present disclosure, an example of the specific QCL type being QCL type D is mainly described, the specific QCL type may be any QCL type.

In the present disclosure, "symbol" may be interchangeably read as the name of any time resource. For example, "symbol" may be interchangeably read with "slot," "subframe," "sub-slot," etc., or "time resource unit that is shorter than a symbol."

At least one of the embodiments of the present disclosure may be applied to the reception/transmission of the DL/UL signals in the same BWP/CC. At least one of the embodiments of the present disclosure may also be applied to the reception/transmission of the DL/UL signals in different BWPs/CCs in the same band.

At least one of the embodiments of the present disclosure may be applied to the reception/transmission of the DL/UL signals to which the same physical cell ID (PCI) corresponds. At least one of the embodiments of the present disclosure may also be applied to the reception/transmission of the DL/UL signals to which different PCIs correspond.

At least one of the embodiments of the present disclosure may be applied to the case in which one DL signal is the RS (SSB/CSI-RS) for the RLM/BFD/L1-RSRP beam measurement/CBD/RRM.

Each of the following embodiments of the present disclosure may be applied to the PDSCH of the single TRP.

The PDSCH of the single TRP may be scheduled with specific DCI (DCI format). The specific DCI format may be, for example, DCI format 1_0 (or a DCI format that does not include a TCI field). The specific DCI format may be DCI format 1_1/1-2. The specific DCI format may direct one TCI state.

The repeated transmission of the multi TRP may not be configured for the UE. In this case, the PDSCH of the single TRP may be scheduled as the PDSCH of a single layer MIMO (with a single layer MIMO).

The PDSCH of the single TRP may be the PDSCH in the case when the multi TRP (for example, CORESET pool index) is not configured for the UE.

The PDSCH of the single TRP may be the PDSCH that is scheduled with at least the CORESET of a CSS. The PDSCH of the single TRP may be the PDSCH that is scheduled with the CORESET of only the CSS (or CSS except for the CSS of type 3).

Each of the following embodiments of the present disclosure may be applied to the PDSCH of the multi TRP.

The PDSCH of the single TRP may be scheduled with the specific DCI (DCI format). The specific DCI format may be DCI format 1_1/1-2. The specific DCI format may direct two TCI states.

The repeated transmission of the multi TRP may not be configured for the UE. In this case, the PDSCH of the multi TRP may be scheduled as the PDSCH of a multi layer MIMO (with a multi layer MIMO).

The PDSCH of the multi TRP may be the PDSCH in the case when the repeated transmission of the multi TRP is configured for the UE. In this case, the PDSCH of the multi TRP may be scheduled as the PDSCH of the repeated transmission (with repetition) that uses a TDM/FDM/SDM.

The PDSCH of the multi TRP may be the PDSCH in the case when an SFN scheme A/B is configured for the UE. The PDSCH of the multi TRP may be the PDSCH that has a plurality of TCI states.

Each of the following embodiments of the present disclosure may be applied to the PDCCH of the single TRP.

The PDCCH of the single TRP may be the PDCCH related to the CORESET for which the SFN (single frequency network) scheme A/B is not configured.

The PDCCH of the single TRP may be the PDCCH related to the CORESET for which the repeated transmission (of two linked SSs) is not configured.

Each of the following embodiments of the present disclosure may be applied to the PDCCH of the multi TRP.

The PDCCH of the multi TRP may be the PDCCH related to the CORESET for which the SFN scheme A/B is configured.

Each of the following embodiments of the present disclosure may be applied to the PUSCH/PUCCH of the single TRP.

The PUSCH/PUCCH of the single TRP may be the PUSCH/PUCCH for which the repeated transmission of the multi TRP is not configured.

Each of the following embodiments of the present disclosure may be applied to the PUSCH/PUCCH of the multi TRP.

The PUSCH/PUCCH of the multi TRP may be the PUSCH/PUCCH for which the repeated transmission of the multi TRP is configured.

Each of the following embodiments of the present disclosure may be applied to the CSI-RS/SRS of the single/multi TRP.

In each of the embodiments in the present disclosure, the PDSCH for the multi TRP based on single DCI may be interchangeably read with the PDSCH (repetition) to which the TDM/FDM/SDM for the multi TRP (as specified in Rel. 16) is applied.

In each of the embodiments in the present disclosure, the PDSCH for the multi TRP may be interchangeably read with the PDSCH (repetition) to which the TDM/FDM/SDM for the multi TRP based on the single DCI (as specified in Rel. 16) is applied.

In each of the embodiments in the present disclosure, the PUSCH/PUCCH/PDCCH for the multi TRP based on the single DCI may be interchangeably read with the repeated transmission (repetition) of the PUSCH/PUCCH/PDCCH for a plurality of TRPs (as specified in Rel. 17 or later versions).

In each of the embodiments in the present disclosure, an SFN PDSCH/PDCCH may be interchangeably read with the SFN PDSCH/PDCCH specified in Rel. 17 or later versions.

Each of the embodiments in the present disclosure may also be applied to the transmission/reception of the plurality of signals that are transmitted in an intra-band carrier aggregation.

### <First Embodiment>

A first embodiment relates to the scheduling restriction.

The UE may assume that X (, X', or X'') DL/UL signals of the different specific QCL types are transmitted/received with the resource in the same time domain.

The specific QCL type may be, for example, the QCL type D or any QCL type.

Such X may be the number of the DL signals of the different QCL type D that can be received at the same time. Such X may also be the number of the different QCL type D for the DL signals that can be received at the same time.

Such X' may be the number of the UL signals of the different QCL type D/spatial relations that can be transmitted at the same time. Such X' may also be the number of the different QCL type D/spatial relations for the UL signals that can be transmitted at the same time.

Such X" may be the number of the DL/UL signals of the different QCL type D/spatial relations that can be received/transmitted at the same time. Such X" may also be the number of the different QCL type D/spatial relations for the DL/UL signals that can be received/transmitted at the same time.

In the present disclosure, "transmitting/receiving the different DL/UL signals with the resource in the same time domain" may mean "transmitting/receiving the different DL/UL signals at the same time."

For example, it may be specified that there is no scheduling restriction between (the reception/transmission of) a first DL signal and a second DL/UL signal.

In other words, the UE may assume that the first DL signal and the second DL/UL signal are transmitted/received at the same time. The UE may also be assumed to transmit/receive the first DL signal and the second DL/UL signal at the same time.

The first DL signal may be, for example, at least one of the SSB and the CSI-RS.

At least one of the SSB and the CSI-RS may be the SSB/CSI-RS that is used for at least one of the radio link monitoring (RLM), the beam failure detection (BFD) and the L1-RSRP (beam) measurement.

The second DL signal may be, for example, the PDCCH/PDSCH/CSI-RS. The CSI-RS may be the CSI-RS for a specific application (for example, for a channel quality indicator (CQI)/tracking).

The second UL signal may be, for example, the PUCCH/PUSCH/SRS.

The UE may assume that the first DL/UL signal and the second DL/UL signal of the different specific QCL types/spatial relations are transmitted/received at the same time.

The first DL signal may be the SSB/CSI-RS.

The second DL signal may be any DL signal (for example, the PDCCH/PDSCH/CSI-RS).

At least one of The SSB and the CSI-RS may be, for example, the SSB/CSI-RS that is used for at least one of the radio link monitoring (RLM), the beam failure detection (BFD) and the L1-RSRP (beam) measurement. The CSI-RS may be the CSI-RS for a specific application (for example, for the channel quality indicator (CQI)/tracking).

The first/second DL signal may be any UL signal (for example, the PUCCH/PUSCH/SRS).

The number of the second DL/UL signals that can be transmitted/received in the same symbol (maximum number, for example, X, X' or X'' described above) may be specified in the specifications in advance or may be reported in UE capability information.

The number (maximum number) may be the number of the DL/UL signals of the different specific QCL types (or spatial relations). In the present disclosure, specific QCL type may be interchangeably read with spatial relation.

For example, the case in which the UE receives the following signals at the same time is assumed:
First DL signal: SSB #0;
Second DL signal: PDCCH (SSB #0 and QCL type D);
Third DL signal: PDCCH (SSB #1 and QCL type D);
Fourth DL signal: PDSCH (SSB #2 and QCL type D); and
Fifth DL signal: PDSCH (SSB #2 and QCL type D).

In this case, the number may be three (i.e., three of SSBs #0 through #2).

The CSI-RS in the CSI-RS resource set in which the repetition is configured to be ON (CSI-RS with repetition) may be counted as one DL signal with the CSI-RS of the CSI-RS resource set. The UE is for sweeping the reception beam for the reception of the CSI-RS with repetition.

The UE may also assume that there is (always) the scheduling restriction with the same symbol as the CSI-RS in the CSI-RS resource set in which the repetition is configured to be ON.

"Number of the DL/UL signals of the different specific QCL types (or spatial relations)" described above may be interchangeably read with "maximum/upper limit of the number of DL/UL signals."

According to the first embodiment described above, the simultaneous reception/transmission of the DL/UL signals can be properly performed in the future radio communication system.

### <Second Embodiment>

A second embodiment relates to the beams that can be received at the same time.

In Rel. 17 and earlier versions, a network (NW) side (for example, the base station) cannot transmit the plurality of DL signals of the different QCL type D from the same panel/TRP/transmission (Tx) chain at the same time.

For example, although in the example shown in FIG. 2A described above, the NW cannot transmit a plurality of beams out of SSBs #1 through #32 at the same time, it may transmit any one beam out of SSBs #1 through #32 and any one beam out of SSBs #33 through #64 at the same time.

In addition, in Rel. 17 and earlier versions, the UE cannot receive the plurality of DL signals of the different QCL type D at the same time in the same panel/Rx chain.

A means to solve these problems is described in the present embodiment.

The combination of beams that can be received at the same time by the UE may be specified/configured. The UE may also notify/report the combination of beams that can be received at the same time by the UE to the NW.

The combination may be referred to as a beam group, a beam grouping, a beam set, etc. The combination may be specified in the specifications in advance or may be configured in the UE with the higher layer signaling (RRC/MAC CE/SIB).

The UE may assume that the DL/UL signals that correspond to the different beams in the same beam group cannot be transmitted/received at the same time.

The UE may assume that the DL/UL signals that correspond to the different beams in the different beam groups can be transmitted/received at the same time.

The UE may assume that the DL/UL signals that correspond to the different beams in the same beam group can be transmitted/received at the same time.

The UE may assume that the DL/UL signals that correspond to the different beams in the different beam groups cannot be transmitted/received at the same time.

For example, the beam group may be each of the groups of group-based beam reporting.

For example, the beam group may correspond to the index with respect to the TRP (for example, the CORESET pool index/TRP ID that is configured with the higher layer signaling).

For example, the beam group may correspond to the (UE) panel or the UE capability value set that is reported in the UE capability information.

The number of the beam groups may be a specific number of two or more. The number of beam groups may be specified in the specifications in advance, may be determined based on the UE capability information or may be configured with the higher layer signaling for the UE.

The index with respect to the beam may be the index of the resource of the reference signal (for example, the SSB/CSI-RS) that is a source of the QCL (for example, a source of the QCL type D). The index with respect to the beam may also be the TCI state ID.

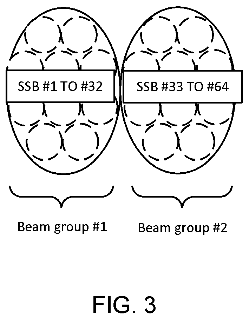

FIG. 3 is a diagram to show an example of a combination of the beams that can be received by the UE at the same time. In the example shown in FIG. 3, the beams of SSBs #1 through #32 are set as the beams of beam group #1 (SSB), and the beams of SSBs #33 through #64 are set as the beams of beam group #2 (SSB).

In the example shown in FIG. 3, for example, the UE cannot receive/transmit the DL/UL signals that correspond to the different beams within beam group #1 (for example, SSB #1 and SSB #10) at the same time. In addition, for example, the UE can receive/transmit the DL/UL signal that corresponds to the beam in beam group #1 (for example, SSB #1) and the DL/UL signal that corresponds to the beam in beam group #2 (for example, SSB #33) at the same time.

In the example shown in FIG. 3, for example, the UE can also receive/transmit the DL/UL signals that correspond to the different beams within beam group #1 (for example, SSB #1 and SSB #10) at the same time. In addition, for example, the UE cannot receive/transmit the DL/UL signal that corresponds to the beam in beam group #1 (for example, SSB #1) and the DL/UL signal that corresponds to the beam in beam group #2 (for example, SSB #33) at the same time.

According to the second embodiment described above, it is possible to properly determine the combination of beams/RSs that can be received at the same time.

### <Third Embodiment>

When the UE has a plurality of Rx chains, which Rx chain is to be used for performing the BFD/CBD, etc., is not sufficiently studied.

In Rel. 17 and earlier versions, the UE can detect the beam failure for each of the TRPs to perform the BFD for each of the two TRPs.

In Rel. 17, in the case of a multi DCI-based multi TRP and no reference signal of the BFD (BFD RS) being configured, the UE can use the RS, which is the PDCCH and the QCL, for each of the CORESET pool indices as a BFD RS to perform the BFD.

In Rel. 17, in the case of multi DCI/single DCI, two sets of the BFD RSs are notified to the UE with the MAC CE, and the beam failure for each of these sets can be detected.

On the other hand, there is no provision in the specifications for the RLM in Rel. 17 that has been changed/improved from Rel. 16 and earlier versions with the assumption of the M-TRP.

In the present embodiment, a method of the BFD/CBD/RLM/RRM is described when the S-TRP/M-TRP is configured and scheduled/configured in the same symbol.

### <<S-TRP>>

The transmission/reception of the S-TRP may be configured for the UE.

In the present disclosure, the transmission/reception of the S-TRP being configured, the transmission/reception of the M-TRP not being configured, the plurality of TCI states not being configured in the PDSCH and an M-TRP BFR (beam failure recovery)/CBD/radio resource management (RRM)/measurement not being configured may be interchangeably read with each other.

For the UE, the first DL signal and the second DL/UL signal of the different specific QCL types may be configured in the same time domain (for example, symbol).

The specific QCL type may be, for example, the QCL type D.

The first DL signal may be, for example, the SSB/CSI-RS for the BFD/RLM/RRM.

The UE may perform the BFD/RLM/RRM using the QCL assumption of the first DL signal (Option 3-1-1).

In Option 3-1-1, when the BFD RS/RLM RS is not configured for the UE, the UE may perform the BFD/RLM using the SSB/CSI-RS, which is the PDCCH and the QCL. In this case, the UE can properly use the beam of the PDCCH to perform the BFD/RLM.

The UE may perform the BFD/RLM/RRM using the QCL assumption of the second DL/UL signal (Option 3-1-2).

In Option 3-1-2, the UE may update the QCL assumption of the BFD RS/RLM RS that has been configured/specified in advance based on the QCL assumption (or spatial relation) of the second second DL/UL signal (Option 3-1-2-1). The QCL assumption to be updated may be the same QCL assumption as the QCL assumption (or spatial relation) of the second DL/UL signal.

In Option 3-1-2, the UE may select one SSB/CSI-RS from among a plurality (for example, 64) of the SSBs/CSI-RSs configured in advance based on the QCL assumption of the second DL/UL signal. Next, the UE may perform the BFD/RLM/RRM using the SSB/CSI-RS that has been selected (Option 3-1-2-2).

In Option 3-1-2, the UE may perform the BFD/RLM/RRM using the RS (SSB/CSI-RS) that is to be the QCL source of the second DL/UL signal (Option 3-1-2-3).

According to Option 3-1-2-3, as in Option 3-1-2-2 described above, a plurality of SSBs/CSI-RSs do not need to be configured in advance, thus reducing a signaling overhead to the UE.

In the present embodiment, priorities may be configured/specified for the first DL signal and the second DL/UL signal. The priorities may be specified in the specifications in advance or may be configured in the UE with the higher layer signaling.

The UE may determine the QCL assumption of the signal for performing the BFD/RLM/RRM based on the priorities.

For example, when the second DL signal is the PDCCH/PDSCH, the UE may prioritize the QCL assumption of the second DL signal. In other words, when the second DL signal is the PDCCH/PDSCH, the UE may perform the BFD/RLM/RRM using the QCL assumption of the second DL signal.

For example, when the first DL signal is the CSI-RS, the UE may prioritize the QCL assumption of the first DL signal. In other words, when the first DL signal is the CSI-RS, the UE may perform the BFD/RLM/RRM using the QCL assumption of the first DL signal.

### <<M-TRP>>

The transmission/reception of the M-TRP may be configured for the UE.

In the present disclosure, the transmission/reception of the M-TRP being configured, the CORESET pool index (1 RRC parameter CORESETPoolIndex) being configured, the plurality of TCI states being configured in the PDSCH, the plurality of TCI states being associated with at least one TCI field and the M-TRP BFR/CBD/RRM/measurement being configured may be interchangeably read with each other.

For the UE, the first DL signal and the second DL/UL signal of the different specific QCL types may be configured in the same time domain (for example, symbol).

The specific QCL type may be, for example, the QCL type D.

The first DL signal may be, for example, the SSB/CSI-RS for the BFD/RLM/RRM.

The UE may perform the BFD/RLM/RRM using the QCL assumption of the first DL signal (Option 3-2-1).

In Option 3-2-1, when the BFD RS/RLM RS is not configured for the UE, the UE may perform the BFD/RLM using the SSB/CSI-RS, which is the PDCCH and the QCL. In this case, the UE can properly use the beam of the PDCCH to perform the BFD/RLM.

In Option 3-2-1, even when the BFD RS/RLM RS is configured for the UE, the BFD RS (a set of a plurality of BFD RSs for the plurality of TRPs) can be configured using the MAC CE for the BFR of the M-TRP. Since the NW (base station) can be updated using the MAC CE so that the BFD RS is the PDCCH and the QCL, even when the BFD RS is configured for the UE, based on Option 3-2-1, the QCL assumption of the PDCCH can be properly used to perform the BFD.

The UE may perform the BFD/RLM/RRM using the QCL assumption of the second DL/UL signal (Option 3-2-2).

In Option 3-2-2, the UE may update the QCL assumption of the BFD RS/RLM RS that has been configured/specified in advance based on the QCL assumption (or spatial relation) of the second second DL/UL signal (Option 3-2-2-1). The QCL assumption to be updated may be the same QCL assumption as the QCL assumption (or spatial relation) of the second DL/UL signal.

In Option 3-2-2, the UE may select one SSB/CSI-RS from among the plurality (for example, 64) of the SSBs/CSI-RSs configured in advance based on the QCL assumption of the second DL/UL signal. Next, the UE may perform the BFD/RLM/RRM using the SSB/CSI-RS that has been selected (Option 3-2-2-2).

In Option 3-2-2, the UE may perform the BFD/RLM/RRM using the RS (SSB/CSI-RS) that is to be the QCL source of the second DL/UL signal (Option 3-2-2-3).

According to Option 3-2-2-3, for example, as in Option 3-1-2-2 described above, the plurality of SSBs/CSI-RSs do not need to be configured in advance, thus reducing the signaling overhead to the UE.

In the present embodiment, when the BFR of the M-TRP is configured for the UE, the UE may select one or more BFD RSs for one TRP. The one or more BFD RSs may be M (for example, M equals 2) BFD RSs at the maximum. For example, when the BFR of two TRPs is configured for the UE, the UE may select four BFD RSs at the maximum.

In the present embodiment, the priorities may be configured/specified for the first DL signal and the second DL/UL signal. The priorities may be specified in the specifications in advance or may be configured in the UE with the higher layer signaling.

The UE may determine the QCL assumption of the signal for performing the BFD/RLM/RRM based on the priorities.

For example, when the second DL signal is the PDCCH/PDSCH, the UE may prioritize the QCL assumption of the second DL signal. In other words, when the second DL signal is the PDCCH/PDSCH, the UE may perform the BFD/RLM/RRM using the QCL assumption of the second DL signal.

For example, when the first DL signal is the CSI-RS, the UE may prioritize the QCL assumption of the first DL signal. In other words, when the first DL signal is the CSI-RS, the UE may perform the BFD/RLM/RRM using the QCL assumption of the first DL signal.

According to the third embodiment described above, even when the S-TRP/M-TRP is configured and scheduled/configured in the same symbol, it is possible to properly perform the BFD/CBD/RLM/RRM.

### <Fourth Embodiment>

In Rel. 17 and earlier versions, when the (DMRS of) PDSCH for which the different QCL type D is configured from that of the (DMRS of) PDCCH overlaps in at least one symbol, the UE is expected/assumed to prioritize the reception of the PDCCH (CORESET).

In Rel. 16 and earlier versions, when the plurality of DL signals are configured in the same symbol, the UE can receive one DL signal of the QCL type D at the maximum.

For the reception of Rel-17 PDCCH, when the plurality of DL signals are configured in the same symbol, the UE can receive two DL signals of the QCL type D at the maximum.

In the present embodiment, the operation of the UE when the DL signals of the different specific QCL types overlap in the same time domain (for example, symbol) is described.

The first/second/third embodiments described above may be applied to the overlap of the PDCCH (the first DL signal) and the PDSCH/PDCCH (the second DL signal).

For example, at least one of the UE that has reported that it supports a capability with respect to the plurality of Rx chains and the UE that has been configured to operate with respect to the plurality of Rx chains may apply the simultaneous reception of the DL signals of a specific number of the different specific QCL types to at least one of the overlap of the PDCCH and PDSCH, and the overlap of the PDCCHs with each other.

The specific number may be, for example, a number greater than that specified in Rel. 17 and earlier versions. The specific QCL type may be, for example, the QCL type D.

### <<Overlap of the PDCCH and the PDSCH>>

When the PDCCH and the PDSCH of the different QCL type D are configured/scheduled in the same time domain (for example, symbol), the UE may receive X PDCCHs/PDSCHs of the different QCL type D at the maximum.

The first embodiment described above may be applied to such X. For example, the value of such X may be restricted.

The second embodiment described above may be applied to the combination of beams that can be received by the UE at the same time. For example, the combination of beams that can be received by the UE at the same time may be restricted.

### <<Overlap of the PDCCH and the PDCCH>>

When the PDCCHs of the different QCL type D are configured/scheduled together in the same time domain (for example, symbol), the UE may receive X PDCCHs of the different QCL type D at the maximum.

The first embodiment described above may be applied to such X. For example, the value of such X may be restricted.

The second embodiment described above may be applied to the combination of beams that can be received by the UE at the same time. For example, the combination of beams that can be received by the UE at the same time may be restricted.

The present embodiment may be applied only to at least one of the UE that supports the repetition of the PDCCH (in Rel. 17) and the UE that is configured with the repetition of the PDCCH.

The present embodiment may be specified/applied separately from the repetition of the PDCCH (in Rel. 17).

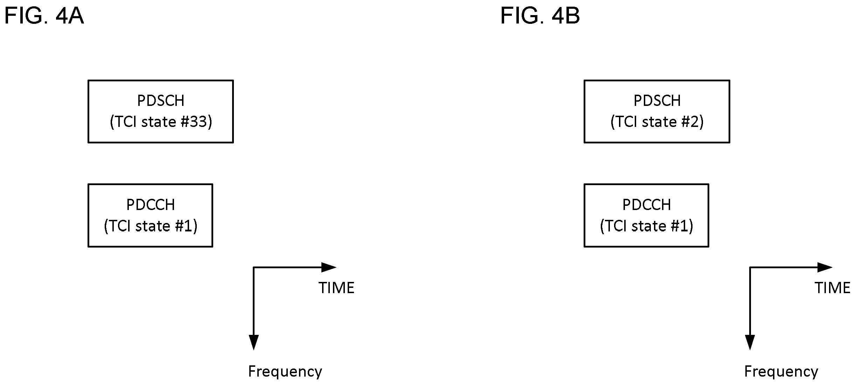

FIG. 4A and FIG. 4B are diagrams to show examples of reception methods of the PDCCH and the PDSCH according to a fourth embodiment. In the examples shown in FIG. 4A and FIG. 4B, an example in which the beam groups shown in FIG. 3 described above are configured for the UE is described. In the examples shown in FIG. 4A and FIG. 4B, TCI state #N (N is an integer) is assumed to correspond to SSB #N.

In the example shown in FIG. 4A, the PDCCH of TCI state #1 (i.e., corresponding to SSB #1) and the PDCCH of TCI state #33 (i.e., corresponding to SSB #33) are scheduled/configured for the UE in the same time domain (symbol). In the example shown in FIG. 4A, since SSB #1 and SSB #33 are the beams of the different beam groups, the UE can receive the PDSCH and the PDCCH in the same time domain (simultaneous reception is possible).

In the example shown in FIG. 4B, the PDCCH of TCI state #1 (i.e., corresponding to SSB #1) and the PDCCH of TCI state #2 (i.e., corresponding to SSB #2) are scheduled/configured for the UE in the same time domain (symbol). In the example shown in FIG. 4B, since SSB #1 and SSB #2 are the beams of the same beam group, the UE cannot receive the PDSCH and the PDCCH in the same time domain (simultaneous reception is not possible). In this case, the UE prioritizes the PDCCH and does not receive the PDSCH.

In the examples in FIG. 4A and FIG. 4B, although the example in which the channels that correspond to the beams of the different beam groups can be received at the same time, and the channels that correspond to the beams of the same beam group cannot be received at the same time is shown, the channels that correspond to the beams of the different beam groups may not be received at the same time, and the channels that correspond to the beams of the same beam group may be received at the same time.

Note that at least one of the operations according to the present embodiment may be specified as an intra-band/intra-CC/within BWP operation. In other words, the present embodiment may be applied only when a plurality of PDCCHs/PDSCHs are configured/scheduled within a certain band/CC/BWP.

According to the fourth embodiment described above, the simultaneous reception with respect to the PDSCH/PDCCH can be properly performed.

### <Fifth Embodiment>

The UE that has the plurality of Rx chains (or the UE that has reported that it supports the operation with respect to the plurality of Rx chains) may perform the BFD/CBD based on the time (a second time/timeline) that is different from the time (a first time/timeline) required for the UE that does not have the plurality of Rx chains (or the UE that does not report that it supports the operation with respect to the plurality of Rx chains).

The second time/timeline may be shorter than the first time/timeline. The second time/timeline may be specified in the specifications in advance or may be notified to the UE with the higher layer signaling (RRC/MAC CE).

For example, the second time/timeline may be one-Nth of the first time/timeline (N is an arbitrary integer). Such N may be, for example, the number of Rx chains of the UE.

For the BFR for each of the TRPs, the second time/timeline may be one-Mth of the first time/timeline (M is an arbitrary integer). Such N may be, for example, the number of Rx chains of the UE. Such M may be, for example, at least one of the number of TRPs, the number of BFD RS sets, and the number of candidate beam sets/groups.

For the BFR for each of the TRPs (as specified in Rel. 17), at least one of a set of the BFD RSs and the candidate beam may be configured for each of the TRPs. In this case, the UE may perform the BFD/CBD (in parallel) in the respective Rx chain/reception panel.

This reduces the time required for the BFD/CBD compared to the UE that has only one Rx chain/reception panel.

For the BFR for each of the cells (as specified in Rel. 16 and earlier versions), when the UE has the plurality of panels, an SSB/CSI-RS index of the largest L1-RSRP and an index with respect to the reception panel of the UE may be specified by receiving all of the candidate beams in one panel and (in parallel) all of the candidate beams in another panel.

In this case, the time required for the CBD can be reduced compared to the case in which the reception/measurement in the one panel and the reception/measurement in the other panel are sequentially performed.

According to the fifth embodiment described above, the time required for the BFD/CBD for the UE can be properly reduced.

### <Variations>

Each of the embodiments of the present disclosure may be applied to the SFN PDSCH/SFN PDCCH.

The UE may determine X (, X' or X'') described above based on the beam associated with the SFN PDSCH (QCL/TCI state) and the beam associated with the SFN PDCCH (QCL/TCI state).

For example, the UE may determine X described above based on the number of the different beams (QCL/TCI states) associated with the SFN PDSCH and the SFN PDCCH.

For example, when TCI state #1 and TCI state #2 correspond to the SFN PDSCH, and TCI state #2 and TCI state #3 to the SFN PDCCH, the UE may determine X described above to be 3.

The UE may determine X (, X' or X'') described above based on a set of the beams associated with the SFN PDSCH (QCL/TCI state) and a set of the beams associated with the SFN PDCCH (QCL/TCI state).

For example, the UE may determine X described above based on the number of sets of the different beams (QCL/TCI states) associated with the SFN PDSCH and the SFN PDCCH.

For example, when TCI state #1 and TCI state #2 (Set #1) correspond to the SFN PDSCH, and TCI state #2 and TCI state #3 (Set #2) to the SFN PDCCH, the UE may determine X described above to be 2.

### <Supplemental>

### [Notification of Information to the UE]

The notification of any information (from the network (NW) (for example, the base station (BS))) to the UE (in other words, a reception of any information from the BS by the UE) in the embodiments described above may be performed using the physical layer signaling (for example, the DCI), the higher layer signaling (for example, an RRC signaling and the MAC CE), a specific signal/channel (for example, the PDCCH, the PDSCH and the reference signal) or a combination thereof.

When the notification described above is performed by the MAC CE, the MAC CE may be identified based on the inclusion of a new logical channel ID (LCID) that is not specified in an existing standard in an MAC subheader.

When the notification described above is performed by the DCI, the notification described above may be performed by a specific field of the DCI, a radio network temporary identifier (RNTI) used to scramble cyclic redundancy check (CRC) bits that are attached to the DCI, the format of the DCI, etc.

The notification of any information to the UE in the embodiments described above may be performed in a periodic, semi-persistent or aperiodic manner.

### [Notification of Information from the UE]

The notification of any information from the UE (to the NW) (in other words, the transmission/reporting of any information to the BS by the UE) in the embodiments described above may be performed using the physical layer signaling (for example, the UCI), the higher layer signaling (for example, the RRC signaling and the MAC CE), the specific signal/channel (for example, the PUCCH, the PUSCH, a PRACH and the reference signal) or a combination thereof.

When the notification described above is performed by the MAC CE, the MAC CE may be identified based on the inclusion of the new LCID that is not specified in the existing standard in the MAC subheader.

When the notification described above is performed by the UCI, the notification described above may be transmitted using the PUCCH or the PUSCH.

The notification of any information from the UE in the embodiments described above may be performed in a periodic, semi-persistent or aperiodic manner.

### [For the Application of Each of the Embodiments]

At least one of the embodiments described above may be applied when specific conditions are met. The specific conditions may be specified in the standard or notified to the UE/BS using the higher layer signaling/physical layer signaling.

At least one of the embodiments described above may be applied only to the UE that has reported a specific UE capability or that supports the specific UE capability.

The specific UE capability may indicate at least one of the following:
- Supporting a specific processing/operation/control/information (for example, the operation with respect to the plurality of Rx chains, the transmission/reception of X DL/UL signals of the different QCL type D in the same time domain (for example, symbol) and the combination of beams that can be received at the same time) for at least one of the embodiments described above;
- Supporting the simultaneous reception of X DL signals of the different QCL type D;
- Supporting the simultaneous transmission of X' UL signals of the different QCL type D/spatial relations;
- Supporting the simultaneous reception/transmission of X" DL/UL signals of the different QCL type D/spatial relations;
- At least one of X, X' and X'' that are supported;
- The number of combinations of beams (beam groups) that are supported and can be received at the same time; and
- Supporting at least one of the transmission and reception of the M-TRP, the simultaneous transmission of the plurality of beams of the UL and a plurality of UE panels (UE capability value sets).

The specific UE capability described above may also be a capability that applies across all frequencies (in common regardless of frequency), a capability for each frequency (for example, one or a combination of cell, band, band combination, BWP, component carrier, etc.), a capability for each frequency range (for example, Frequency Range 1 (FR1), FR2, FR3, FR4, FR5, FR2-1 and FR2-2), a capability for each subcarrier spacing (SCS), or a capability for each feature set (FS) or feature set per component-carrier (FSPC).

The specific UE capability described above may also be a capability that applies across all duplex systems (in common regardless of duplex system) or a capability for each duplex system (for example, time division duplex (TDD) and frequency division duplex (FDD)).

At least one of the embodiments described above may also be applied when the UE is configured/activated/triggered with specific information related to the embodiments described above (or to perform the operation of the embodiments described above) by the higher layer signaling (RRC/MAC CE/SIB)/physical layer signaling. For example, the specific information may be information indicating an activation of the simultaneous transmission/reception of the DL/UL signals of different QCL type D that use the plurality of Rx chains, any RRC parameter for a specific release (for example, Rel. 18/19), etc.

This reduces the power consumption of the UE by setting the transmission/reception panel that is not used to be "idle," since the UE does not assume the simultaneous transmission/reception of the plurality of signals of different QCL type D (or spatial relations), except for the reception of the PDSCH of the M-TRP (in Rel. 17) or the transmission of the PUSCH using a plurality of UL beams (in Rel. 18 and later versions).

When the UE does not support at least one of the specific UE capabilities described above or is not configured with the specific information described above, the UE may apply the operation of, for example, Rel. 15/16.

Even if the UE supports at least one of the UE capabilities described above, when the operation described above is not configured by the base station (for example, when connecting to the base station that supports functions in Rel. 17 and earlier versions), the UE may assume that an existing (as specified in Rel. 17 and earlier versions) scheduling restriction is applied.

### (Supplementary Note A)

Regarding one embodiment of the present disclosure, the following supplementary notes of the invention will be given.

### {Supplementary Note A-1}

A terminal including: a control section that assumes that a plurality of signals of different specific quasi-co-location (QCL) types are scheduled or configured in a same time domain in a frequency range higher than a first frequency range; and a transmitting/receiving section that transmits or receives the plurality of signals in the same time domain.

### {Supplementary Note A-2}

The terminal according to supplementary note A-1, wherein a first signal out of the plurality of signals is a synchronization signal block or a channel state information reference signal, and a second signal out of the plurality of signals is any downlink signal or uplink signal.

### {Supplementary Note A-3}

The terminal according to supplementary note A-1 or A-2, wherein the transmitting/receiving section receives a configuration of a combination with respect to signals that can be received in the same time domain.

### {Supplementary Note A-4}

The terminal according to any one of supplementary notes A-1 to A-3, wherein the control section performs at least one of radio link monitoring, beam failure detection, and radio resource management by using a QCL assumption of a specific signal out of the plurality of signals.

### (Supplementary Note B)

Regarding one embodiment of the present disclosure, the following supplementary notes of the invention will be given.

### {Supplementary Note B-1}

A terminal includes: a control section that assumes that a first downlink (DL) signal and a second DL signal of different specific quasi-co-location (QCL) types are scheduled or configured in a same time domain in a frequency range higher than a first frequency range; and a receiving section that receives the first DL signal and the second DL signal in the same time domain, wherein the first DL signal is a first physical downlink control channel (PDCCH), and the second DL signal is a physical downlink shared channel (PDSCH) or a second PDCCH.

### {Supplementary Note B-2}

The terminal according to supplementary note B-1, wherein the receiving section receives a configuration related to the number of at least one of a PDSCH and a PDCCH receivable in the same time domain.

### {Supplementary Note B-3}

The terminal according to supplementary note B-1 or B-2, wherein the receiving section receives a configuration of a combination with respect to signals receivable in the same time domain, and the control section controls reception of the first PDCCH, and the PDSCH or the second PDCCH, based on the configuration.

### {Supplementary Note B-4}

The terminal according to anu one of supplementary notes B-1 to B-3, wherein when the receiving section receives a configuration of PDCCH repetition, the receiving section receives the first PDCCH, and the PDSCH or the second PDCCH in the same time domain.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

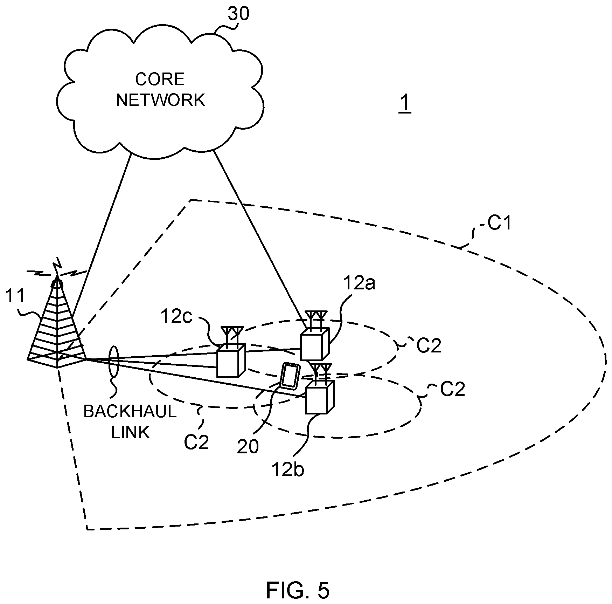

FIG. 5 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a user plane function (UPF), an Access and Mobility management Function (AMF), a Session Management Function (SMF), Unified Data Management (UDM), an ApplicationFunction (AF), a Data Network (DN), a Location Management Function (LMF), and Operation, Administration, and Maintenance (management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

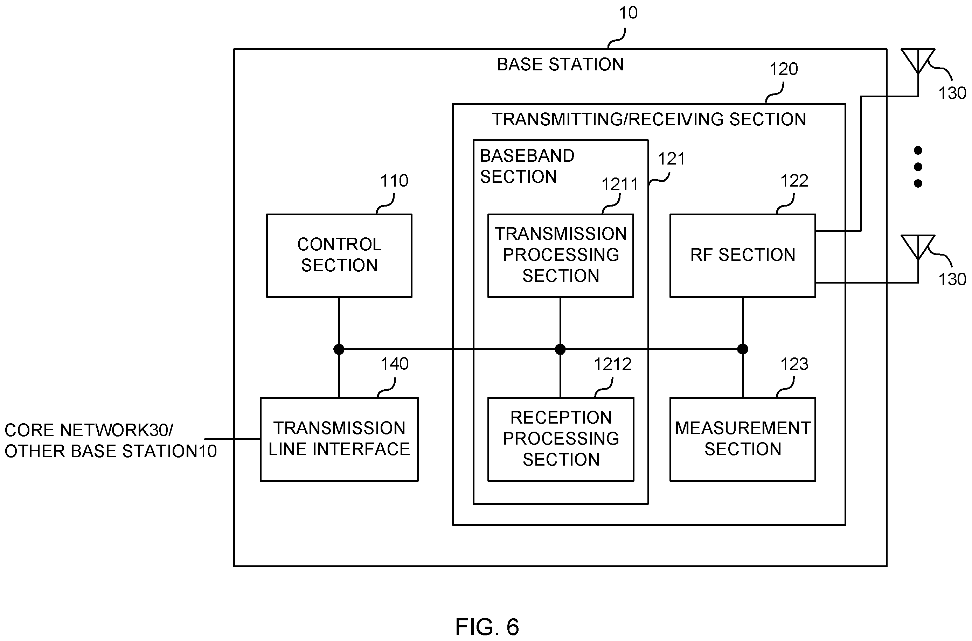

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node providing NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may schedule or configure a plurality of signals of different specific quasi-co-location (QCL) types in a same time domain in a frequency range (for example, FR2/FR2-1/FR2-2/FR3/FR4/FR5) higher than a first frequency range.

The transmitting/receiving section 120 may transmit or receive the plurality of signals in the same time domain (first embodiment).

The control section 110 may schedule or configure a first downlink (DL) signal and a second DL signal of different specific quasi-co-location (QCL) types (for example, QCL type D) in a same time domain in a frequency range (for example, FR2/FR2-1/FR2-2/FR3/FR4/FR5) higher than a first frequency range. The transmitting/receiving section 120 may transmit the first DL signal and the second DL signal in the same time domain. The first DL signal may be a first physical downlink control channel (PDCCH), and the second DL signal may be a physical downlink shared channel (PDSCH) or a second PDCCH.

### (User Terminal)

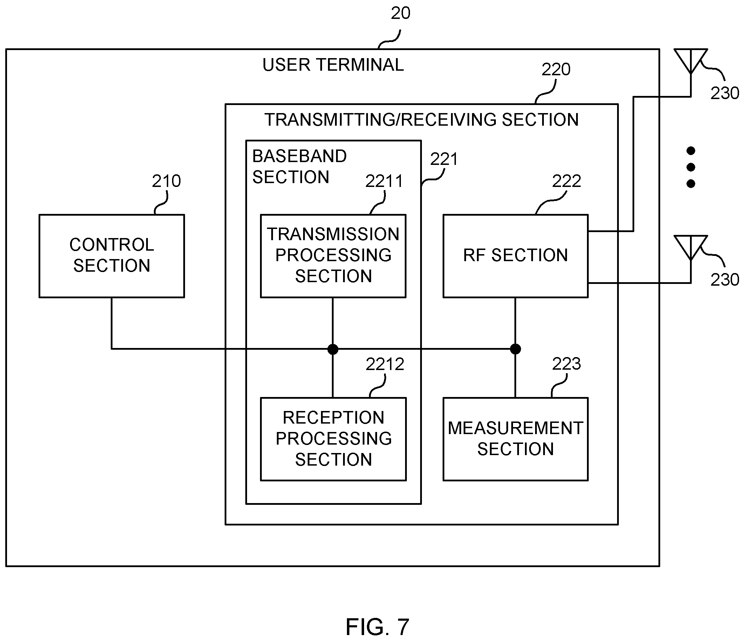

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may assume that a plurality of signals of different specific quasi-co-location (QCL) types are scheduled or configured in a same time domain in a frequency range (for example, FR2/FR2-1/FR2-2/FR3/FR4/FR5) higher than a first frequency range. The transmitting/receiving section 220 may transmit or receive the plurality of signals in the same time domain (first embodiment).

A first signal out of the plurality of signals may be a synchronization signal block or a channel state information reference signal. A second signal out of the plurality of signals may be any downlink signal (for example, PDSCH/PDCCH/CSI-RS) or uplink signal (for example, PUSCH/PUCCH/SRS) (first embodiment).

The transmitting/receiving section 220 may receive a configuration of a combination (for example, beam group) with respect to signals receivable in the same time domain (second embodiment).

The control section 210 may perform at least one of radio link monitoring, beam failure detection, and radio resource management by using a QCL assumption of a specific signal out of the plurality of signals (third embodiment).

The control section 210 may assume that a first downlink (DL) signal and a second DL signal of different specific quasi-co-location (QCL) types (for example, QCL type D) are scheduled or configured in a same time domain in a frequency range (for example, FR2/FR2-1/FR2-2/FR3/FR4/FR5) higher than a first frequency range. The transmitting/receiving section 220 may receive the first DL signal and the second DL signal in the same time domain. The first DL signal may be a first physical downlink control channel (PDCCH), and the second DL signal may be a physical downlink shared channel (PDSCH) or a second PDCCH.

The transmitting/receiving section 220 may receive a configuration related to the number of at least one of a PDSCH and a PDCCH receivable in the same time domain (first/fourth embodiment).

The transmitting/receiving section 220 may receive a configuration of a combination with respect to signals receivable in the same time domain. The control section 210 may control reception of the first PDCCH, and the PDSCH or the second PDCCH, based on the configuration (second/fourth embodiment).

When receiving a configuration of PDCCH repetition, the transmitting/receiving section 220 may receive the first PDCCH, and the PDSCH or the second PDCCH in the same time domain.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

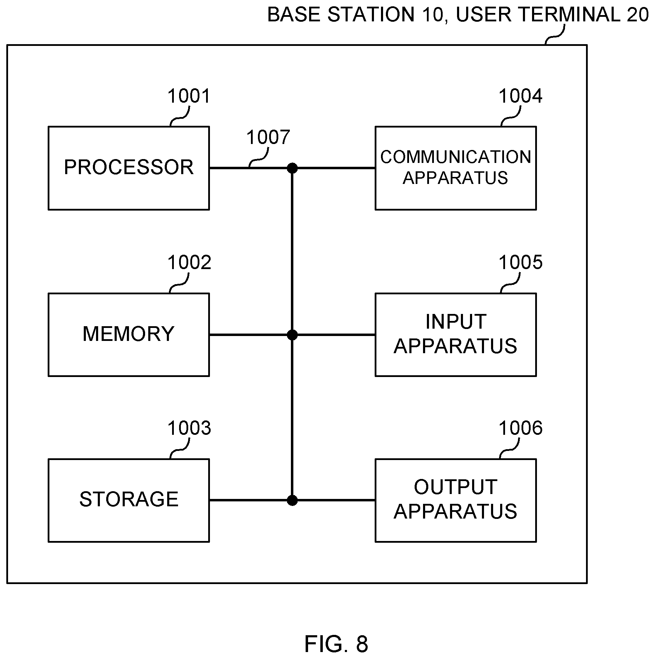

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B"**.**

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

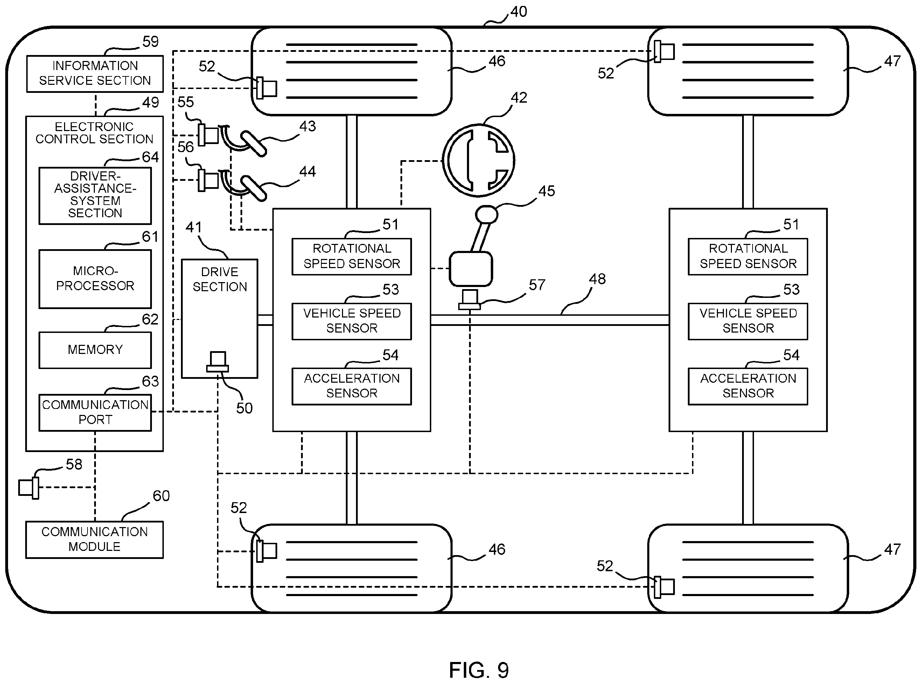

FIG. 9 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)"**,** and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a control section that assumes that a first downlink (DL) signal and a second DL signal of different specific quasi-co-location (QCL) types are scheduled or configured in a same time domain in a frequency range higher than a first frequency range; and
a receiving section that receives the first DL signal and the second DL signal in the same time domain, wherein
the first DL signal is a first physical downlink control channel (PDCCH), and the second DL signal is a physical downlink shared channel (PDSCH) or a second PDCCH.

2. The terminal according to claim 1, wherein
the receiving section receives a configuration related to the number of at least one of a PDSCH and a PDCCH receivable in the same time domain.

3. The terminal according to claim 1, wherein
the receiving section receives a configuration of a combination with respect to signals receivable in the same time domain, and
the control section controls reception of the first PDCCH, and the PDSCH or the second PDCCH, based on the configuration.

4. The terminal according to claim 1, wherein
when the receiving section receives a configuration of PDCCH repetition, the receiving section receives the first PDCCH, and the PDSCH or the second PDCCH in the same time domain.

5. A radio communication method for a terminal, the radio communication method comprising:
assuming that a first downlink (DL) signal and a second DL signal of different specific quasi-co-location (QCL) types are scheduled or configured in a same time domain in a frequency range higher than a first frequency range; and
receiving the first DL signal and the second DL signal in the same time domain, wherein
the first DL signal is a first physical downlink control channel (PDCCH), and the second DL signal is a physical downlink shared channel (PDSCH) or a second PDCCH.

6. A base station comprising:
a control section that schedules or configures a first downlink (DL) signal and a second DL signal of different specific quasi-co-location (QCL) types in a same time domain in a frequency range higher than a first frequency range; and
a transmitting section that transmits the first DL signal and the second DL signal in the same time domain, wherein
the first DL signal is a first physical downlink control channel (PDCCH), and the second DL signal is a physical downlink shared channel (PDSCH) or a second PDCCH.
